(19) Europäisches Patentamt
European Patent Office
Office européen des brevets

(11) Publication number: **0 116 759**
**B1**

(12) # EUROPEAN PATENT SPECIFICATION

(45) Date of publication of patent specification: **18.03.87**

(51) Int. Cl.$^4$: **C 08 J 9/22,** C 08 G 73/14, C 08 G 73/10, C 08 L 79/08

(21) Application number: **83307241.6**

(22) Date of filing: **28.11.83**

(54) **Production of macro balloon structures.**

(30) Priority: **17.02.83 US 467263**

(43) Date of publication of application:
**29.08.84 Bulletin 84/35**

(45) Publication of the grant of the patent:
**18.03.87 Bulletin 87/12**

(84) Designated Contracting States:
**AT BE CH DE FR GB IT LI LU NL SE**

(56) References cited:
**GB-A-1 588 314**
**US-A-4 183 838**
**US-A-4 407 980**

(73) Proprietor: **Gagliani, John**
**6280 Lance Place**
**San Diego California 92120 (US)**
(73) Proprietor: **Long, John V.**
**1756 E. Lexington Avenue**
**El Cajon California 92121 (US)**

(72) Inventor: **Gagliani, John**
**6280 Lance Place**
**San Diego California 92120 (US)**
Inventor: **Long, John V.**
**1756 E. Lexington Avenue**
**El Cajon California 92121 (US)**

(74) Representative: **Austin, Hedley William et al**
**A.A. THORNTON & CO. Northumberland House**
**303-306 High Holborn**
**London WC1V 7LE (GB)**

**EP 0 116 759 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention is concerned with polyimide foams and, more particularly, with the preparation of closed cell polyimide foams in the form of macroballoons.

A number of polyimide compositions having excellent flame resistance and utility as coatings and adhesives are described in U.S. Patents 4161477, 4183838 and 4183839. The coating and adhesive compositions described in these patents are made by first preparing a suitable bisimide by reacting an aromatic tetracarboxylic acid dianhydride with a lactam. The ratio of lactam to dianhydride is preferably in the range 2.3:1 to 2.7:1 and the imidization reaction is preferably carried out at a temperature of from 170 to 200°C for a period of from 20 to 60 minutes.

The polyimide-forming material is then prepared by dissolving the bisimide in an inert solvent and adding a suitable diamine to the resulting solution to produce a viscous liquid comprising an intimate, unpolymerised mixture of $N_1N'$-disubstituted aromatic bisimide dicarboxylic acid and diamine which can be converted to a high molecular weight polymer on heating.

The liquid is coated on to a surface and polymerised by heating to a temperature of from 177 to 316°C, for a period of from 30 minutes to 5 hours. The following is an example of the exchange reaction which occurs on heating:

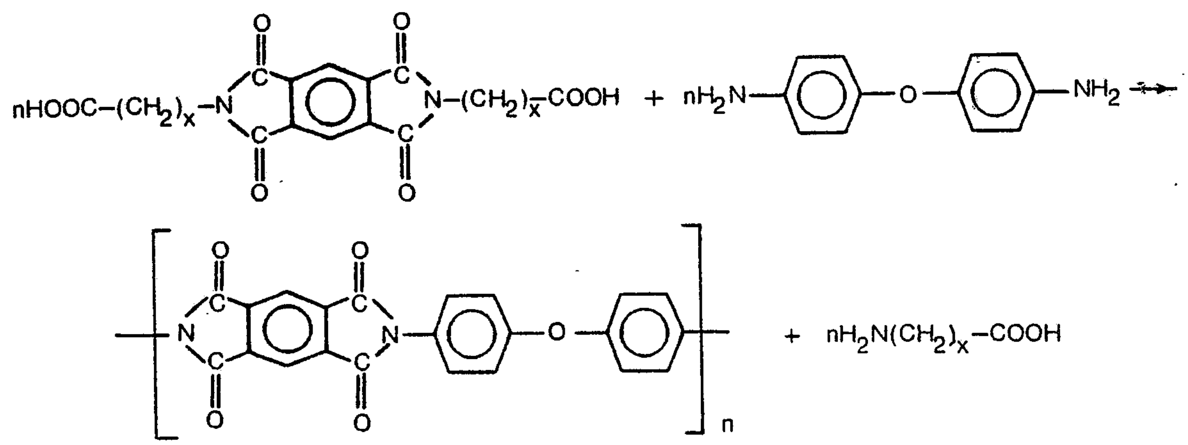

where n and x are integers.

The resulting coating is tough, highly adherent to various surfaces, and has very few pinholes or bubbles. It has excellent peel strength and is resistant to high temperatures, peeling and abrasion.

The coating material of the prior art, however, is not suitable for use in applications requiring a cellular or foam material, since conventional agitation foaming and the addition of known blowing agents add to the costs and complexity of the process and are not entirely effective at the relatively high polymerization temperatures which are required.

European patent application 83301629.8 (EP—A1 0 097 411) describes methods of making modified polyimide/polyimide-amide open cell foams and the products of such methods. According to these methods, the reaction of a lactam with an aromatic dianhydride in a mole ratio of from about 0.05:1 to 1.5:1 gives an N-substituted aliphatic monoimide, which is then esterified using a suitable alcohol. A suitable diamine is then added and the resulting liquid is dried to a film or powder. The dry material spontaneously expands into a consolidated open cell foam when heated to a temperature of from 230 to 320°C. At the lower end of this temperature range, a primarily polyimide-amide foam is obtained, while toward the upper end of the range, the foam is primarily of polyimide. Flexibility, flame resistance and other physical characteristics vary according to the relative amounts of the two polymers in the final product.

While this open cell foam is excellent for many applications, and can have physical properties tailored for specific purposes, it is not satisfactory for certain uses. For example, the open cell foam tends to shrink when exposed to flame or high heat, it may absorb water or other liquids, and it is permeable to liquids and gases. Also, the relatively high foaming temperatures used require complex and expensive heating equipment and the process is energy intensive.

There is a need for a closed cell foam having good flame and heat resistance, resistance to flame-induced shrinking, flexibility, and resistance to penetration by liquids and gases.

We have now developed a method of making flexible, high-temperature and flame shrinkage-resistant structures of bonded polyimide macroballoons which largely overcome the problems associated with the prior art. The reactions which occur in the production of these materials are complex and not fully understood, but it appears that under the polymerisation conditions used, the polymer produced is primarily a polyimide with a proportion of polyimide-amide. For the purposes of this application, the polymer will be referred to as a polyimide.

According to the present invention, there is provided a method of making high temperature and flame resistant macroballoon structures which comprises:

(a) reacting a lactam (component A) with an aromatic tetracarboxylic acid dianhydride (component B) in a mole ratio of A:B of from 0.05:1 to 1.5:1 to form an N-substituted imide,

(b) reacting the N-substituted imide from step (a) with a suitable reactive solvent to form an esterified N-substituted imide,

(c) mixing at least one diamine (component C) with the product of step (b),

(d) drying the resulting mixture

(e) reducing the dried material from step (d) to particles having an average diameter of from 0.5 to 10 mm,

(f) heating the particles from step (e) to a temperature of from 90 to 300°C, while substantially preventing interparticle contact, to form discrete macroballoons,

(g) coating the macroballoons from step (f) with a liquid bonding agent,

(h) shaping the coated macroballoons from step (g) into a desired configuration, and

(i) curing the bonding agent to give a lightweight structure of bonded macroballoons.

Either a consolidated, uniform closed cell shaped foam product or a number of macroballoons or beads can be prepared by the method of the invention, depending on whether full foaming is restrained or unrestrained.

Macroballoons can be produced in diameters ranging from 0.4 to 15 mm by unrestrained foaming, for example, on a flat open surface or by feeding the powder into a flowing hot air stream or a centre heated metal tube. For optimum results, the powder size should be towards the lower end of the preferred 0.5 to 10 mm size range. As described in detail below, a novel foam-like structure can be prepared by wetting the macroballoons with a small quantity, generally less than 10% by weight based on the weight of macroballoons, of a suitable liquid bonding agent, shaping the resulting mass as desired, and curing the bonding agent at any suitable temperature, preferably of up to about 150°C. The foam-like structures can be formed by any suitable method, such as, for example by filling a mould and curing the bonding agent or by continuously curing a layer of the wetted macroballoons to form panels or sheets.

Since a relatively small amount of bonding agent is used, amounting to less than 10% by weight of the final product, the resulting structures substantially retain the high flame resistance of the polyimide macroballoons. The nature of the final structure will vary from rigid to fairly flexible depending upon the bonding agent used.

Any suitable aromatic dianhydride can be used for the preparation of the monoimide. Typical aromatic dianhydrides include, for example, those described and referred to in the patents cited above. Due to their ready availability at reasonable prices and the excellent foams which they produce, pyromellitic dianhydride and 3,3',4,4'-benzophenone tetracarboxylic acid dianhydride (BTDA) are preferred.

Any suitable lactam can be reacted with the selected dianhydride to produce the desired imide. Preferably, the lactam has the formula:

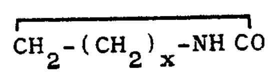

where x is an integer of from 1 to 5. Of these, the best results are obtained using caprolactam (x = 4).

While any suitable reaction conditions can be used, the best results are obtained when the dianhydride is added to the lactam and the mixture is heated at a temperature of from 150 to 200°C until imidization is complete, which typically takes from 5 to 90 minutes. Good results are obtained at a temperature of from 170 to 180°C for a period of about 30 minutes.

In order to obtain a satisfactory foaming material, it is essential that the mole ratio of lactam to dianhydride is in the range 0.05:1 to 1.5:1. Above the upper limit of this range, the resulting material forms a coating which does not foam, while below the lower limit of this range, the material produced is excessively rigid. Within the range, the best results are obtained using a mole ratio of lactam to dianhydride of from 0.5 to 1.0.

The imides produced by the above reaction have the formula:

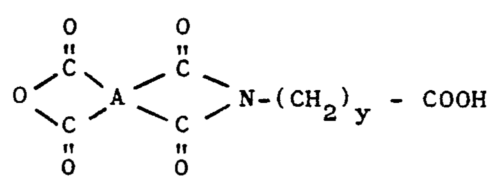

where y is an integer of from 2 to 6 and A is

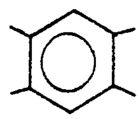
and/or
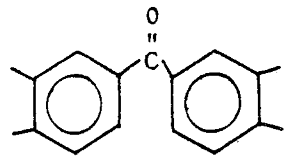

The imide obtained is then esterified by dissolving it in a suitable reactive solvent at a suitable temperature. Any suitable reactive solvent can be used as the esterifying agent. Typical of these are aliphatic alcohols containing up to 7 carbon atoms and aromatic alcohols, either of which can have halogen or amino substituents, and mixtures or two or more thereof.

The best results are obtained using alcohols which have a boiling point in the range 75 to 100°C. Lower boiling alcohols are too reactive and higher boiling alcohols require excessively rigorous processing conditions to dry the resulting resin. Excellent results are obtained using isopropanol, although good results are also obtained using ethanol and, in particular, secondary alcohols having low reactivities and boiling points in the specified range.

The esterification reaction which takes place is as follows:

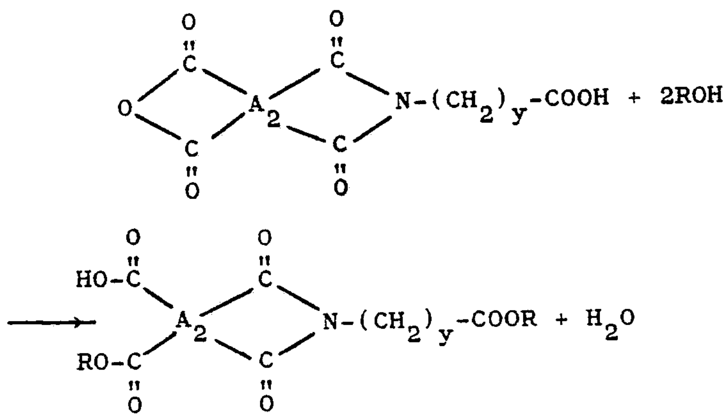

where y is an integer from 2 to 6, A is as defined above, and R is an aliphatic or aromatic radical which can have halogen or amino substituents. The esterification can be carried out under any suitable conditions. Typically, a mole ratio of lactam to alcohol of from 1:8 to 1:15 is preferred to ensure rapid esterification at reflux temperature. The solution is heated at reflux (typically at a temperature of from 70 to 90°C) until clear, which typically takes from 60 to 90 minutes.

Once esterification is complete, the selected diamine, or diamines, is added to the solution. Preferably, an approximately stoichiometric quantity of diamine to esterified imide is added.

Any suitable diamine can be used. Typical diamines for example, *m*-phenylene diamine, p-phenylene diamine, 4,4′-diaminodiphenyl ether, 4,4′-diaminodiphenyl sulphone, 3,3′-diaminodiphenyl sulphone, 4,4′-diaminodiphenyl sulphide, 4,4′-diaminodiphenylmethane, 3,3′-diaminodiphenylmethane, and mixtures of two or more thereof. Of these, the best results are obtained with 4,4′-diaminodiphenylmethane. If desired, one or more aliphatic diamines can be used in combination with these aromatic diamines. Typical aliphatic diamines for this purpose include, for example, 1,3-diaminopropane, 1,4-diaminobutane, 1,6-diaminohexane, 1,8-diaminooctane, 1,12-diaminododecane, and mixtures of two or more thereof.

Additives to improve various characteristics of the final foam can be added as desired. Any suitable additives can be used to improve product characteristics, such as fillers, surfactants and fire retardants.

The physical characteristics of panels prepared from adhesively bonded polyimide macroballoons can be varied by incorporating suitable quantities of various fillers in the composite structure. For example, incorporating from 1 to 50% by weight (based on the weight of the final panel) of glass microballoons in the panels decreases water absorption and increases the oxygen index. Good results are obtained using about 25% by weight of glass microballoons. Adding suitable quantities of fibres such as glass, graphite, Kevlar polyamids, etc., improves the load carrying capacity as well as the sheer strength of the resulting panels.

Microwave absorption by the polymer can be modified and increases by the addition prior to the drying step of from 1 to 50% by weight (based on the weight of the final structure) of any suitable microwave absorbing material such as graphite powder, a ferrite, a metal-ceramic compound such as ferro titanate, or a mixture of two or more thereof.

Surfactants (surface active agents) are particularly desirable when macroballoons are being produced, since they tend to give greater cell wall thicknesses and walls of greater resiliency.

Suitable surfactants include, for example, Dow Corning Corp. 190 or 193, FC430 from Minnesota Mining & Manufacturing Co., and L550 from Union Carbide Corp. While any suitable concentration can be used, from 0.01 to 2% by weight (based on the weight of the solution prior to drying) is preferred. Of these

surfactants, the best results are obtained with DC 193.

Fire retardants can be added to reduce smoke emission, reduce flame spread, and extend the burnthrough resistance of the product. Suitable fire retardants, which are typically used in amounts of from 2 to 50% by weight (based on the weight of the final foam or macroballoons) include, for example, Firebrake ZB, aluminium trihydrate, antimony oxide, and mixtures of two or more thereof.

In addition to the additives mentioned above, other materials can be added to the foamable material, such as fillers, colorants, ultraviolet absorbers and the like.

The solution can be dried by any suitable means. Simply heating the solution in an oven at a temperature of from 65 to 95°C until dry is satisfactory. Other conventional methods, such as spray drying, rotary drying, thin film evaporation, etc. can also be used as desired. The resulting free-flowing powder or flakes are non-tacky and can be stored indefinitely at room temperature.

In order to produce uniform high quality macroballoons, it is essential that the foaming powder has an average particle diameter in the range 0.5 to 10 mm. The best results are obtained using powders having average particle diameters in the range 1.0 to 5.00 mm. If the drying process does not produce particles in the desired range, they can be ground or pulverized to the desired size. Typically, the particles are reduced in size by means of mechanical grinding.

The resulting free flowing powder is suitable for the preparation of closed cell foam or macroballoons. However, for the best results with optimum uniformity, it is often preferred that the powder is further dried (either before or after reduction to the final particle size) at a moderate temperature in a moderate vacuum in order to remove any remaining solvent. Good results are obtained when the powder is dried for a period of from 30 to 120 minutes at a temperature of from 50 to 80°C, at a pressure of from 25 to 29 in.Hg (84.7 to 98.2kPa).

The final step in converting the powder into a foam or macroballoons is accomplished by heating the powder to the selected foaming temperature for a suitable length of time.

The reaction which takes place is quite complex, since it is a combined condensation and exchange reaction. The reactions which are believed to occur are described in U.S. Patent Application 390778. Heating the powder to a temperature of from 90 to 150°C for a period of from 10 to 60 minutes without volume restraint causes it to expand to approximately 50 times its original volume to produce macroballoons which appear to comprise a mixture of polyimide and polyimide-amide polymers. The macroballoons produced are tough, resilient and will not shrink appreciably or emit significant smoke or toxic by-products when exposed to an open flame.

Any suitable liquid bonding agent can be used to bond the macroballoons of the invention into composite structures. Typical bonding agents are synthetic resins, including, for example, the polyimide liquid described herein, polyimide coating resins as described in European patent application 83307240.8, epoxy resins, polyesters, polyimides, polyvinyls, synthetic rubbers, fluorinated hydrocarbon resins, chlorinated hydrocarbon resins, phenolic, urea and melamine resins, and mixtures and copolymers of two or more thereof. While any suitable curing temperature can be used, resins curing at temperatures of not greater than about 150°C are preferred, in order to avoid any chance of degrading the macroballoons. Resins which cure at a somewhat higher temperature can be used with care.

Only sufficient resin to fully wet the macroballoons need be used to prepare the composite structures. Generally, this results in a final structure of which less than 10% by weight is resin. A low proportion of resin is desirable in order to maintain the flame and high temperature resistance of the polyimide macroballoons and to keep the structure as light as possible. Of course, the interstices between the macroballoons can be entirely filled with resin if desired. Any suitable wetting agent can be used to increase the wettability of the macroballoons by the bonding agent. The macroballoons can be pre-treated with etchants, solvents, abrasives, etc., as desired in order to improve the adhesion of the bonding agent thereto.

In order that the invention may be more fully understood, the following examples are given by way of illustration. Examples 1 and 2, are concerned with the preparation of particles of polyimide-forming material from which macroballoons or foam can be prepared; Examples 3 and 4 describe the preparation of macroballoons, and Examples 5 to 10 are concerned with the preparation of composite structures containing macroballoons.

## Example 1

515.5 g (1.6 moles) of 3,3′, 4,4′-benzophenone tetracarboxylic acid dianhydride (BTDA) and 45.2 g (0.4 moles) of caprolactam were placed in a three-litre flask and heated to a temperature of about 175°C. After a period of about 30 minutes at this temperature, the mixture was cooled to about 70°C and 965 g of isopropanol was added. The solution was refluxed at about 90°C for about 70 minutes until the solution appeared clear. The solution was then cooled to just below 70°C and 317.12 g (1.6 moles) of 4,4′-diaminodiphenylmethane was added. The solution was then refluxed at about 90°C for about 15 minutes, then cooled to room temperature and coated on to aluminium foil. The coating was dried overnight at about 82°C. The brittle product was crushed and placed in a vacuum oven at about 82°C for about 30 minutes at a pressure of 27 in. Hg (91.4kPa). The powder was then further crushed to an average (and fairly uniform) particle diameter of about 3 mm.

## Example 2

The procedure of Example 1 was repeated, but an alternative means of drying was used. Thus, the liquid was sprayed into a chamber preheated to a temperature of about 75°C using a high speed atomiser. By carefully adjusting the atomiser, particles having an average diameter in the desired range were obtained; any larger particles were ground to the desired size.

## Example 3

Powder samples prepared by the procedures of Example 1 and Example 2 were sprayed into a moving hot air stream maintained at about 300°C. The particles spontaneously expanded to form macroballoons which were carried by the air stream to a collector.

## Example 4

The experiments of Example 3 were repeated, except that about 20 g of DC 193 surfactant was added to each solution before drying. The macroballoons obtained using the surfactant had slightly thicker walls and greater resiliency.

## Example 5

A quantity of macroballoons was prepared by the method described in Example 4. Weighed samples of the macroballoons were each mixed with just enough of the following catalyzed epoxy resins to thoroughly wet the macroballoons: (a) Araldite® 7065, available from Ciba-Geigy, (b) Epon® 154, available from the Shell Chemical Co., and (c) Araldite 8047, a flame retardant epoxy resin available from Ciba-Geigy. The coated samples were placed in open rectangular moulds and the resins allowed to fully cure at room temperature. In each case, a rigid lightweight structure was obtained. Reweighing the structures showed that less than 10% by weight of each structure was resin. Each of the structures had excellent flame resistance, with that obtained from (c) having the greatest resistance.

## Example 6

Four samples of macroballoons prepared by the method described in Example 4 were mixed with each of the following adhesive resin solutions: (a) a cellulose acetate butyrate adhesive available from the Dow Chemical Co. under the Trade Mark 276-V9, (b) a water dispersed polyvinyl acetate emulsion available from the Borden Co. under the Trade Mark Gelva S-55, and (c) another polyvinyl acetate emulsion available from Union Carbide under the Trade Mark Ucar Lates 130. The samples were placed in open rectangular moulds and heated to about 100°C for approximately 60 minutes. Well bonded structures were obtained which contained less than 10% by weight of resin.

## Example 7

Foamable particles obtained by the method of Example 1 were sprinkled lightly over a moving web. The web was continuously moved through a heated zone where the particles were heated to about 150°C for approximately 10 minutes; under these conditions, the particles expanded to give discrete macroballoons and a few aggregates comprising several macroballoons. Four samples of the resulting macroballoons were coated with each of the following resins: (a) a polyamide available from General Mills Chemical under the Trade Mark Versamid C, (b) a polyamide available from the Dow Chemical Co. under the Trade Mark D.E.H., (c) a vinyl pyridine latex available from Goodyear under the Trade Mark Pliabond LVP-4668, and (d) a vinyl pyridine latex available from E. I. duPont de Nemours under the Trade Mark VPX-500. The samples were placed in cylindrical moulds and any excess resin was allowed to drain away. The moulds were heated as follows: (a) 200°F (93.3°C) for about 60 minutes, (b) 300°F (148.9°C) for about 20 minutes, (c) 140°F (60°C) for about 30 minutes, and (d) 150°F (65.6°C) for about 20 minutes. In each case, a well bonded lightweight structure was obtained. Pre- and post-weighings showed that less than 10% of the weight of each structure was resin.

## Example 8

Samples of macroballoons prepared by the method described in Example 7 were placed in two moulds. The first mould was flooded with a mixture of a urea-formaldehyde resin (diluted to 40% solids, by weight) available from American Cyanamid Co. under the Trade Mark Urac and about 3% by weight (based on the weight of resin) of HF6 catalyst available from National Casein Corp. The second mould was flooded with a thin aqueous mixture of Resimene®, a melamine-formaldehyde resin available from Monsanto, and about 4% by weight (based on the weight of resin) of ammonium sulphate catalyst. Each mould was drained of excess solution. The first mould was heated to about 120°C for approximately 2 hours and the second mould was heated to about 90°C for approximately 4 hours. The products were well consolidated lightweight structures each containing slightly over 10% by weight of resin.

## Example 9

A quantity of macroballoons prepared by the method described in Example 3 was divided into four samples. Each sample was mixed with enough catalyzed Epon 154 epoxy resin to lightly coat the

macroballoons. The samples were then treated as follows: (a) the coated macroballoons were spread in a layer about 0.5 in. (1.27 cm) thick over a thin aluminium foil and a second foil was placed over the layer, (b) the coated macroballoons were spread in a layer of about 1 in. (2.54 cm) thick on a mould-release coated surface, a thin glass fibre fabric impregnated with catalyzed Epon 154 resin was placed over the macroballoon layer, and a second 1 in. (2.54 cm) thick layer of coated macroballoons was laid thereover, (c) an aluminium box-section structural shape having a length of about 2ft. (0.61m) and a cross-section of 1 in. x 1 in. (2.54 cm x 2.54 cm) was filled with the coated macroballoons, and (d) a titanium honeycomb structure having a thickness of about 2 in. (5.08cm) and a cell diameter of about 0.3in. (0.76 cm) was filled with the coated macroballoons. Each of these structures was heated to about 90°C until curing was complete. In each case a lightweight structure was obtained with the macroballoons bonded to each other and to the adjacent elements. The panels obtained from Examples (a) and (b) exhibited greater strength and rigidity than structures obtained using macroballoons alone. The structures obtained from Examples (c) and (d) showed greater impact resistance and rigidity.

Example 10

The experiment described in Example 5 (a) was repeated with the following changes: (a) about 5% by weight (based on the weight of resin) of finely chopped graphite fibres was added to the epoxy coating liquid prior to coating the macroballoons and (b) about 10% by weight (based on the weight of resin) of finely chopped glass fibres was added to the epoxy coating liquid just prior to coating the macroballoons. After coating and curing as described in Example 5 (a), the resulting lightweight structures were tested and found to be slightly stronger and more rigid than the corresponding structures without the fibre additives.

**Claims**

1. A method of making high temperature and flame resistant macroballoon structures which comprises:

(a) reacting a lactam (component A) with an aromatic tetracarboxylic acid dianhydride (component B) in a mole ratio of A:B of from 0.05:1 to 1.5:1 to form an N-substituted imide,

(b) reacting the N-substituted imide from step (a) with a suitable reactive solvent to form an esterified N-substituted imide,

(c) mixing at least one diamine (component c) with the product of step (b),

(d) drying the resulting mixture,

(e) reducing the dried material from step (d) to particles having an average diameter of from 0.5 to 10 mm,

(f) heating the particles from step (e) to a temperature of from 90 to 300°C, while substantially preventing interparticle contact, to form discrete macroballoons,

(g) coating the macroballoons from step (f) with a liquid bonding agent,

(h) shaping the coated macroballoons from step (g) into a desired configuration, and

(i) curing the bonding agent to give a lightweight structure of bonded macroballoons.

2. A method according to claim 1, in which component A is caprolactam, 2-pyrrolidone, 2-piperidone, or a mixture of two or more thereof.

3. A method according to claim 1 or 2, in which component B is 3,3', 4,4'-benzophenone tetracarboxylic acid dianhydride and/or pyromellitic dianhydride.

4. A method according to any of claims 1 to 3, in which component A is caprolactam, the alcohol is isopropanol, and component C is 4,4'-diaminodiphenylmethane.

5. A method according to any of claims 1 to 4, which includes the additional step of adding a fire retardant in an amount of from 2 to 50% by weight, based on the weight of the resulting macroballoons, to the mixture from step (c), said fire retardant being aluminium trihydrate and/or antimony oxide.

6. A method according to any of claims 1 to 5, which includes the additional step of adding glass macroballoons in an amount of from 1 to 50% by weight, based on the weight of the final structure, to the mixture from step (c).

7. A method according to any of claims 1 to 6, which includes the additional step of adding radar-absorbing material in an amount of from 1 to 50% by weight, based on the weight of the final structure, to the mixture from step (c), said radar-absorbing material being graphite, a ferrite, a metal-ceramic compound, or a mixture of two or more thereof.

8. A method according to claim 7, in which the radar-absorbing material is ferro titanate and is added to the mixture from step (c) in an amount of about 10% by weight based on the weight of the final structure.

9. A method according to any of claims 1 to 8, in which step (f) is carried out by feeding the particles into a moving hot air stream to form discrete macroballoons.

10. A method according to any of claims 1 to 9, in which the liquid bonding agent is a synthetic resin.

11. A method according to claim 10, in which the synthetic resin is an epoxy resin, a polyester, a polyimide, a polyvinyl, a synthetic rubber, a fluorinated hydrocarbon resin, a chlorinated hydrocarbon resin, a phenolic, urea, or melamine resin, or a mixture or copolymer of two or more thereof.

12. A method according to any of claims 1 to 11, in which the bonding agent comprises less than 10% by weight of the final structure.

13. A method according to any of claims 1 to 12, which includes the additional step of adding a filler to the liquid bonding agent before coating the macroballoons, said filler being aramid fibres, graphite fibres, glass fibres, carbon fibres, a graphite powder, a fluorocarbon powder, or a mixture of two or more thereof.

14. A method according to any of claims 1 to 13, in which steps (h) and (i) are carried out with the coated macroballoons in contact with a surface to which said macroballoons are bonded on curing of the bonding agent.

**Patentansprüche**

1. Verfahren zur Herstellung hochtemperatur- und flammenbeständiger Makrobläschen-Strukturen, umfassend das

(a) Umsetzen eines Lactams (Komponente A) mit einem aromatischen Tetracarbonsäuredianhydrid (Komponente B) in einem Molverhältnis von A:B von 0,05:1 bis 1,5:1, um ein N-substituiertes Imid zu bilden,

(b) Umsetzen des N-substituierten Imids aus Stufe (a) mit einem geeigneten, reaktiven Lösungsmittel, um ein verestertes N-substituiertes Imid zu bilden,

(c) Vermischen mindestens eines Diamins (Komponente C) mit Produkt aus Stufe (b),

(d) Trocknen der resultierenden Mischung,

(e) Reduzieren des getrockneten Materials aus Stufe (d) zu Teilchen mit einem durchschnittlichen Durchmesser von 0,5 bis 10 mm,

(f) Erhitzen der Teilchen aus Stufe (e) auf eine Temperatur von 90 bis 300°C, während eine Berührung der Teilchen miteinander überwiegend vermieden wird, um diskrete Makrobläschen zu bilden,

(g) Beschichten der Makrobläschen aus Stufe (f) mit einem flüssigen Bindemittel,

(h) Formen der beschichteten Makrobläschen aus Stufe (g) zu einer erwünschten Konfiguration und

(i) Härten des Bindemittels, um eine Leichtgewichtstruktur aus gebundenen Makrobläschen zu erhalten.

2. Verfahren nach Anspruch 1, wobei die Komponente A Caprolactam, 2-Pyrrolidon, 2-Piperidon oder eine Mischung aus zwei oder mehreren hiervon ist.

3. Verfahren nach Anspruch 1 oder 2, wobei die Komponente B 3,3', 4,4'-Benzophenontetracarbonsäuredianhydrid und/oder Pyromellitsäuredianhydrid ist.

4. Verfahren nach einem der Ansprüche 1 bis 3, wobei die Komponente A Caprolactam, der Alkohol Isopropanol und die Komponente C 4,4'-Diaminodiphenylmethan ist.

5. Verfahren nach einem der Ansprüche 1 bis 4, beinhaltend die zusätzliche Stufe des Zugebens eines feuerhemmenden Mittels in einer Menge von 2 bis 50 Gew.-%, bezogen auf das Gewicht der resultierenden Makrobläschen, zu der Mischung aus Stufe (c), wobei das feuerhemmende Mittel Aluminiumtrihydrat und/oder Antimonoxid ist.

6. Verfahren nach einem der Ansprüche 1 bis 5, beinhaltend die zusätzliche Stufe des Zusetzens von Glas-Makrokügelchen in einer Menge von 1 bis 50 Gew.-%, bezogen auf das Gewicht der fertigen Struktur, zu der Mischung aus Stufe (c).

7. Verfahren nach einem der Ansprüche 1 bis 6, beinhaltend die zusätzliche Stufe des Zugebens eines radarabsorbierenden Materials in einer Menge von 1 bis 50 Gew.-%, bezogen auf das Gewicht der fertigen Struktur, zu der Mischung aus Stufe (c), wobei das radarabsorbierende Material Graphit, ein Ferrit, eine Metall-Keramik-Verbindung oder eine Mischung aus zwei oder mehreren hiervon ist.

8. Verfahren nach Anspruch 7, wobei das radarabsorbierende Material Ferrotitanat ist und der Mischung aus Stufe (c) in einer Menge von etwa 10 Gew.-%, bezogen auf das Gewicht der fertigen Struktur, zugesetzt wird.

9. Verfahren nach einem der Ansprüche 1 bis 8, wobei die Stufe (f) durchgeführt wird, indem die Teilchen in einen sich bewegenden Heißluftstrom eingespeist werden, um diskrete Makrobläschen zu bilden.

10. Verfahren nach einem der Ansprüche 1 bis 9, wobei das flüssige Bindemittel ein synthetisches Harz ist.

11. Verfahren nach Anspruch 10, wobei das synthetische Harz ein Epoxyharz, Polyester, Polyimid, Polyvinylharz, synthetischer Kautschuk, fluoriertes Kohlenwasserstoffharz, chloriertes Kohlenwasserstoffharz, phenolisches Harz, Harnstoff- osder Melaminharz oder eine Mischung oder ein Copolymer aus zwei oder mehreren hiervon ist.

12. Verfahren nach einem der Ansprüche 1 bis 11, wobei das Bindemittel weniger als 10 Gew.-% der fertigen Struktur ausmacht.

13. Verfahren nach einem der Ansprüche 1 bis 12, beinhaltend die zusätzliche Stufe des Zugebens eines Füllstoffs zu dem flüssigen Bindemittel vor dem Beschichten der Makrobläschen, wobei es sich bei dem Füllstoff um Aramidfasern, Graphitfasern, Glasfasern, Kohlenstoffasern, ein Graphitpulver, Fluorkohlenstoffpulver oder eine Mischung aus zwei oder mehreren hiervon handelt.

14. Verfahren nach einem der Ansprüche 1 bis 13, wobei die Stufen (h) und (i) derart ausgeführt werden, daß die beschichteten Makrobläschen in Berührung mit einer Oberfläche stehen, an die die Makrobläschen beim Härten des Bindemittels gebunden werden.

**Revendications**

1. Un procédé pour fabriquer des structures de perles creuses ou macro-bulles résistantes aux températures élevées et ignifuges, qui consiste:

(a) à faire réagir un lactame (composant A) avec un dianhydride d'acide tétracarboxylique aromatique (composant B) dans un rapport molaire A/B de 0,05 : 1 à 1,5 : 1 pour former un imide N-substitué,

(b) à faire réagir l'imide N-substitué de l'étape (a) avec un solvant réactif convenable pour former un imide N-substitué estérifié,

(c) à mélanger au moins une diamine (composant C) avec le produit de l'étape (b),

(d) à sécher le mélange résultant,

(e) à réduire le produit séché de l'étape (d) en particules ayant un diamètre moyen de 0,5 à 10 mm,

(f) à chauffer les particules de l'étape (e) à une température de 90 à 300°C, tout en empêchant pratiquement le contact des particules entre elles, pour former des macro-bulles distinctes,

(g) à revêtir les macro-bulles de l'étape (f) avec un agent adhésif liquide,

(h) à mettre en forme les macro-bulles revêtues de l'étape (g) dans une configuration souhaitée et

(i) à durcir l'agent adhésif pour donner une structure légère de macro-bulles collées.

2. Un procédé selon la revendication 1, dans lequel le composant A est le caprolactame, la 2-pyrrolidone, la 2-pipéridone ou un mélange de deux ou plusieurs d'entre eux.

3. Un procédé selon la revendication 1 ou 2, dans lequel le composant B est le dianhydride d'acide 3,3',4,4'-benzophénonetétracarboxylique et/ou le dianhydride pyromellitique.

4. Un procédé selon l'une quelconque des revendications 1 à 3, dans lequel le composé A est le caprolactame, l'alcool est l'isopropanol et le composant C est le 4,4'-diaminodiphénylméthane.

5. Un procédé selon l'une quelconque des revendications 1 à 4, qui comprend l'étape supplémentaire d'addition au mélange de l'étape (c) d'un agent ignifugeant en quantité de 2 à 50% en poids, par rapport aux macro-bulles résultantes, ledit agent ignifugeant étant du trihydrate d'aluminium et/ou de l'oxyde d'antimoine.

6. Un procédé selon l'une quelconque des revendications 1 à 5, qui comprend l'étape supplémentaire d'addition au mélange de l'étape (c) de macro-bulles de verre en quantité de 1 à 50% en poids, par rapport à la structure finale.

7. Un procédé selon l'une quelconque des revendications 1 à 6, qui comprend l'étape supplémentaire d'addition au mélange de l'étape (c) d'une substance anti-radar en quantité de 1 à 50% en poids, par rapport à la structure finale, ladite substance anti-radar étant le graphite, un ferrite, un composé métal-céramique ou un mélange de deux ou plusieurs d'entre eux.

8. Un procédé selon la revendication 7, dans lequel la substance anti-radar est un ferrotitanate et on l'ajoute au mélange de l'étape (c) en quantité d'environ 10% en poids, par rapport à la structure finale.

9. Un procédé selon l'une quelconque des revendications 1 à 8, dans lequel l'étape (f) est mise en oeuvre par introduction des particules dans un courant d'air chaud pour former des macro-bulles distinctes.

10. Un procédé selon l'une quelconque des revendications 1 à 9, dans lequel l'agent adhésif liquide est une résine synthétique.

11. Un procédé selon la revendication 10, dans lequel la résine synthétique est une résine époxydique, un polyester, un polyimide, une résine polyvinylique, un caoutchouc synthétique, une résine d'hydrocarbure fluoré, une résine d'hydrocarbure chloré, une résine phénolique, une résine d'urée ou de mélamine ou un mélange ou copolymère de deux ou plusieurs d'entre eux.

12. Un procédé selon l'une quelconque des revendications 1 à 11, dans lequel l'agent adhésif constitue moins de 10% en poids de la structure finale.

13. Un procédé selon l'une quelconque des revendications 1 à 12, qui comprend l'étape supplémentaire d'addition d'une charge à l'agent adhésif liquide avant l'enduction des macro-bulles, ladite charge consistant en fibres d'aramide, fibres de graphite, fibres de carbone, poudre de carbone, poudre de fluorocarbure ou un mélange de deux ou plusieurs d'entre eux.

14. Un procédé selon l'une quelconque des revendications 1 à 13, dans lequel les étapes (h) et (i) sont mises en oeuvre avec les macro-bulles enduites en contact avec une surface sur laquelle les macro-bulles sont collées par durcissement de l'agent adhésif.